# Europäisches Patentamt
# European Patent Office
# Office européen des brevets

(19)

(11) Veröffentlichungsnummer: **0 148 973**
**B1**

(12) # EUROPÄISCHE PATENTSCHRIFT

(45) Veröffentlichungstag der Patentschrift:
**14.10.87**

(21) Anmeldenummer: **84105783.9**

(22) Anmeldetag: **21.05.84**

(51) Int. Cl.⁴: **F 02 C 3/28,** F 02 C 6/10,
F 01 K 23/06

(54) Kombinierte Gasturbinen-Dampfturbinen-Anlage mit vorgeschalteter Kohlevergasungsanlage.

(30) Priorität: **31.05.83 DE 3319711**

(43) Veröffentlichungstag der Anmeldung:
**24.07.85 Patentblatt 85/30**

(45) Bekanntmachung des Hinweises auf die Patenterteilung:
**14.10.87 Patentblatt 87/42**

(84) Benannte Vertragsstaaten:
**AT BE CH DE FR GB IT LI LU NL SE**

(56) Entgegenhaltungen:
DE-A-2 429 993
DE-A-2 733 029
DE-A-2 924 245
FR-A-2 331 680
GB-A-1 298 434
GB-A-2 029 855
GB-A-2 075 124
NL-A-8 201 667

(73) Patentinhaber: **Siemens Aktiengesellschaft Berlin
und München, Wittelsbacherplatz 2, D-8000
München 2 (DE)**

(72) Erfinder: **Goebel, Konrad, Dipl.- Ing., Stettiner
Strasse 5, D-8520 Erlangen (DE)**
Erfinder: **Becker, Bernard, Dr. Dipl.- Ing.,
Lothringer Weg 2N, D-4330 Mülheim/Ruhr (DE)**

EP 0 148 973 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung liegt auf dem Gebiet der Kraftwerkstechnik und ist bei der Erzeugung von elektrischem Strom aus Gas und Kohle mit Hilfe eines Kombiprozesses anzuwenden, bei dem die Abwärme der Gasturbine für einen nachgeschalten Dampfprozeß ausgenutzt wird und als Brennstoff Kohlegas aus einer Kohlevergasungsanlage eingesetzt wird.

Bei einer bekannten Anlage dieser Art ist die Abgasleitung des Gasturbinenblockes primärseitig an einen Dampferzeuger angeschlossen, der Teil eines Dampfturbinenblockes ist, welcher im übrigen eine Hochdruck- und eine Niederdruckturbine, einen Kondensator, einen Speisewasserbehälter und eine Speisewasserpumpe enthält. (DE-Z "Brennstoffe-Wärme-Kraft", 1979, Seiten 214 ff.) Eine spezielle Zuordnung der Kohlevergasungsanlage zu dem aus Luftverdichter, Brennkammer, Gasturbine und Generator bestehenden Gasturbinenblock kann darin bestehen, daß dem Vergaser der Kohlenvergasungsanlage ein Dampferzeuger zur Verwertung der Rohgaswärme und ein Wärmetauscher zur Erwärmung des Reingases durch das Rohgas nachgeschaltet sind und daß der vor dem Rohgas-Reingas-Wärmetauscher angeordnete Dampferzeuger als Hochdruckdampferzeuger ausgebildet ist, dessen sekundärseitiger Ausgang mit dem Ausgang des Dampferzeugers des Dampfturbinenblockes verbunden ist (DE-A-31 14 984; US-Z "Applied Energy", 1982, Seite 91).

Bei einem anderen bekannten kombinierten Prozeß sind eine Kohlevergasungsanlage und ein Gasturbinenblock einander derart zugeordnet, daß der Brennkammer der Gasturbine oder den Brennern in der Gasturbinenbrennkammer neben dem Reingas aus der Kohlevergasungsanlage ein Teil des in der Luftzerlegungsanlage anfallenden Stickstoffes zugeführt wird und der überschüssige Anteil vor Eintritt des Gasturbinenluftverdichters dem aus der Atmosphäre angesaugten Luftstrom als Maßnahme zur Stickoxydreduzierung beigemischt wird (DE-A-31 00 751).

Ausgehend von einer kombinierten Gasturbinen-Dampfturbinen-Anlage mit den Merkmalen des Oberbegriffes des Anspruches 1 (DE-A-31 14 984) liegt der Erfindung die Aufgabe zugrunde, durch eine geeignete Ausgestaltung der Anlage die Nutzung der im Rohgas enthaltenden Wärme im Sinne einer Optimierung des Wirkungsgrades der Gesamtanlage zu verbessern und hierbei gleichzeitig die Bildung von Stickoxiden bei der Verbrennung des Kohlegases in der Brennkammer des Gasturbinenblockes zu minimieren.

Zur Lösung dieser Aufgabe ist gemäß der Erfindung vorgesehen, daß dem Rohgas-Reingas-Wärmetauscher ein Niederdruckdampferzeuger nachgeschaltet ist, dessen sekundärseitiger Ausgang mit dem Niederdruckteil der Dampfturbine verbunden ist, und daß der Stickstoffauslaß der in der Kohlevergasungsanlage befindlichen Luftzerlegungseinrichtung ausschließlich mit der Reingasleitung zur Brennkammer der Gasturbine und/oder mit den Brennern in der Brennkammer verbunden ist.

Durch eine derartige Ausgestaltung der Gesamtanlage wird die im Rohgas enthaltende Wärme wegen ihrer Einspeisung in den Dampfturbinenprozeß optimal genutzt und gleichzeitig der für die Reduzierung von Stickoxiden im Abgas der Gasturbine erforderliche Energieaufwand verringert bzw. mit dem in der Luftzerlegungseinheit der Kohlevergasungsanlage erforderlichen Energieaufwand gekoppelt.

Eine weitere Verbesserung des Gesamtwirkungsgrades der Anlage kann dadurch erreicht werden, daß ein Teil des den Hochdruckwärmetauscher verlassenden Rohgases in die Kühlzone des Vergasers der Kohlevergasungsanlage rückgeführt wird und somit der Durchsatz an Rohgas durch den Hochdruckwärmetauscher vergrößert und damit die Leistung des Wärmetauschers erhöht wird.

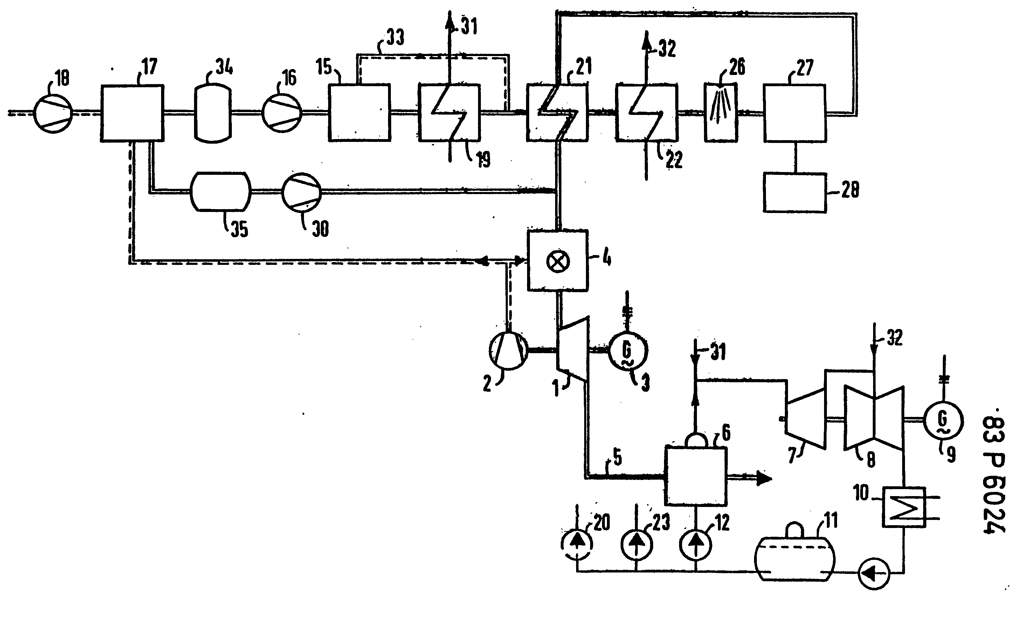

Ein Ausführungsbeispiel der neuen Anlage ist in der Figur schematisch dargestellt.

Die Gesamtanlage besteht aus den drei Komponenten: Gasturbinenblock, Dampfturbinenblock und Kohlevergasungsanlage. Der Gasturbinenblock besteht dabei aus der Gasturbine 1, die den Verdichter 2 und den Generator 3 antreibt und der die Brennkammer 4 vorgeschaltet ist. Die Abgasleitung 5 führt zum Wärmetauscher 6, der seinerseits Teil des Dampfturbinenblockes ist. Dieser besteht im übrigen aus dem Hochdruckteil 7 und dem Niederdruckteil 8 einer Dampfturbine mit dem zugeordneten Generator 9, dem nachgeschalteten Kondensator 10, dem Speisewasserbehälter 11 und der Speisewasserpumpe 12.

Die Kohlevergasungsanlage enthält als Hauptaggregat den Vergaser 15, dem ein Sauerestoffverdichter 16 und die Luftzerlegungseinheit 17 vorgeschaltet sind. Die Luftzerlegungseinheit 17 wird von den Luftverdichter 2 der Gasturbine mit Luft versorgt, zusätzlich erforderliche Luft kann über den Anfahrverdichter 18 eingespeist werden.

Dem Vergaser 15 ist der Hochdruckwärmetauscher 19 nachgeschaltet, der sekundärseitig aus dem Speisewasserbehälter 11 des Dampfturbinenblockes mittels der Pumpe 20 gespeist wird. Der erzeugte Hochdruckdampf wird über die Leitung 31 in die Dampfleitung zwischen dem Dampferzeuger 6 und der Hochdruckturbine 7 eingespeist.

Dem Hochdruckdampferzeuger nachgeschaltet ist der Rohgas-Reingas-Wärmetauscher 21, dem weiterhin der Niederdruckdampferzeuger 22 nachgeschaltet ist. Dieser wird sekundärseitig über die Pumpe 23 mit Speisewasser versorgt und gibt den erzeugten Niederdruckdampf über die Dampfleitung 32 in den Niederdruckteil 8 der Dampfturbine ein.

Den Wärmetauschern 19, 21 und 22 ist die aus den beiden Aggregaten 26 und 27 bestehende Waschanlage nachgeschaltet, wobei an die Entschwefelungsanlage 27 eine Anlage zur Herstellung von elementarem Schwefel 28 aus dem abgetrennten Schwefelwasserstoff angeschlossen ist.

Der in der Luftzerlegungseinheit 17 gesamtanfallende Stickstoff wird über den Verdichter 30 in die Brennkammer 4 eingespeist. Dabei kann der Stickstoff dem Reingas vor dem Eintritt in die Brennkammer beigemischt werden oder er kann getrennt an die Brenner der Gasturbinenbrennkammer direkt geführt werden.

Als Element für eine wirtschaftliche Betriebsweise der Gesamtanlage ist ferner vorgesehen, daß der aus der Luftzerlegungsanlage 17 anfallende Sauerstoff über einen zwischen Luftzerlegungsanlage 17 und Sauerstoffverdichter 16 angeordneten, unter Druck stehenden Sauerstoff-Pufferspeicher 34 dem Sauerstoffverdichter 16 zugeführt wird.

In der gleichen Weise wird der aus der Luftzerlegungsanlage 17 anfallende Stickstoff über einen unter Druck stehenden Stickstoff-Pufferspeicher 35 dem Stickstoffverdichter 30 zugeleitet.

Zur Verbesserung der thermischen Leistung des Hochdruckwärmetauschers 19 kann primärseitig hinter diesem Wärmetauscher die Gasleitung 33 abzweigen, die einen Teil des auf etwa 400° C (Richtwert) abgekühlten Rohgases in die Kühlzone des Vergasers 15 zurückführt.

## Patentansprüche

1. Kombinierte Gasturbinen-Dampfturbinen-Anlage, bei der die Abgasleitung (5) des aus Luftverdichter (2), Brennkammer (4) Gasturbine (1) und Generator (3) bestehenden Gasturbinenblockes primärseitig an einen Dampferzeuger (6) angeschlossen ist, seinerseits Teil eines Dampfturbinenblockes ist, welcher im übrigen eine Hochdruck- (7) und eine Niederdruckturbine (8), einen Kondensator (10), einen Speisewasserbehälter (11) und eine Speisewasserpumpe (12) enthält, und bei der die Brennkammer (4) des Gasturbinenblockes an den Ausgang einer Kohlevergasungsanlage angeschlossen ist, deren Luftzerlegungseinheit (17) einen Auslaß für den abgetrennten Stickstoff aufweist und derem Vergaser (15) ein Dampferzeuger (19) zur Verwertung der Rohgaswärme und ein Wärmetauscher (21) zur Erwärmung des Reingases durch das Rohgas nachgeschaltet sind, wobei der vor dem Rohgas-Reingas-Wärmetauscher (21) angeordnete Dampferzeuger (19) als Hochdruck-Dampferzeuger ausgebildet ist, dessen sekundärseitiger Ausgang (31) mit dem Ausgang des Dampferzeugers (6) des Dampfturbinenblockes verbunden ist,
   dadurch gekennzeichnet,
   daß dem Rohgas-Reingas-Wärmetauscher (21) ein Niederdruckdampferzeuger (22) nachgeschaltet ist, dessen sekundärseitiger Ausgang (32) mit dem Niederdruckteil (8) der Dampfturbine verbunden ist,
   und daß der Stickstoffauslaß der in der Kohlevergasungsanlage befindlichen Luftzerlegungseinheit (17) ausschließlich mit der Reingasleitung zur Brennkammer (4) oder mit den Brennern in der Brennkammer (4) verbunden ist.

2. Anlage nach Anspruch 1, dadurch gekennzeichnet, daß der Auslaß für den Sauerstoff in der Luftzerlegungsanlage (17) über einen unter Druck stehenden Sauerstoff-Pufferspeicher (34) mit einem Verdichter (16) verbunden ist.

3. Anlage nach Anspruch 1 oder 2, dadurch gekennzeichnet, daß der Auslaß für den Stickstoff in der Luftzerlegungsanlage (17) mit einem Verdichter (30) über einen unter Druck stehenden Stickstoff-Pufferspeicher (35) verbunden ist.

4. Anlage nach einem der Ansprüche 1 bis 3, dadurch gekennzeichnet, daß hinter dem Hochdruck-Dampferzeuger (31) primärseitig eine Gasleitung (33) abzweigt, die mit der Gasleitung in der Kühlzone des Vergasers (15) der Kohlevergasungsanlage verbunden ist.

## Claims

1. A combined gas turbine/steam turbine plant, wherein the waste gas line (5) of the gas turbine unit (which gas turbine unit comprises air compressor (2), combustor (4), gas turbine (1) and generator (3)) is connected to the primary side of a steam generator (6) which in turn is part of a steam turbine unit (which steam turbine unit comprises in addition a high-pressure (7) and low-pressure turbine (8), a condenser (10), a feed-water reservoir (11) and a feed-water pump (12)) and wherein the combustor (4) of the gas turbine unit is connected to the outlet of a coal gasification plant including an air-separation unit (17) having an outlet for the separated nitrogen and including a gasifier (15) downstream of which are connected a steam generator (19) for utilizing the crude gas heat and a heat exchanger (21) for heating the purified gas through the crude gas, the steam generator (19), which is upstream of the crude gas/purified gas heat exchanger (21), being a high-pressure steam generator whose secondary-side outlet (31) is connected to the outlet of the steam generator (6) of the steam turbine unit, characterised in that a low-pressure steam generator (22), the secondary-side outlet (32) of which is connected to the low-pressure part (8) of the steam turbine, is connected to the crude gas/purified gas heat exchanger (21), downstream thereof, and that the nitrogen outlet of the air-separation unit (17) of the coal gasification plant is connected exclusively to the purified gas line leading to the combustor (4) or to the burners in the combustor (4).

2. A plant according to claim 1, caracterised in that the oxygen outlet of the air-separation plant (17) is connected to a compressor (16) by way of an oxygen buffer store (34) which is under pressure.

3. A plant according to claim 1 or 2, characterised in that the nitrogen outlet of the air-separation plant (17) is connected to a compressor (30) by way of a nitrogen buffer store (35) which is under pressure.

4. A plant according to any one of claims 1 to 3, characterised in that a gas line (33), which is connected to the gas line in the cooling area of the gasifier (15) of the coal gasification plant, branches off from the high-pressure steam generator (31), on the primary side thereof and downstream thereof.

**Revendications**

1. Installation combinée turbine à gaz-turbine à vapeur, dans laquelle la conduite (5) de gaz d'échappement du bloc de turbine à gaz, constitué d'un compresseur d'air (2), d'une chambre de combustion (4), d'une turbine à gaz (1) et d'un alternateur (3), est raccordée côté primaire à un générateur de vapeur (6) qui fait lui-même partie d'un bloc de turbine à vapeur, comprenant, par ailleurs, une turbine haute pression (7), une turbine basse pression (8), un condenseur (10), un réservoir d'eau d'alimentation (11) et une pompe d'eau d'alimentation (12), et dans laquelle la chambre de combustion (4) du bloc de turbine à gaz est raccordée à la sortie d'une installation de gazéification du charbon dont l'unité de décomposition d'air (17) présente une sortie pour l'azote séparé et dont le gazéificateur (15) est suivi d'un générateur de vapeur (19) pour l'utilisation de la chaleur du gaz brut et d'un échangeur de chaleur (21) pour réchauffer le gaz purifié par le gaz brut, le générateur de vapeur (19) en amont de l'échangeur de chaleur gaz brut-gaz purifié (21) étant réalisé comme un générateur de vapeur haute pression, dont la sortie (31) côté secondaire est relié à la sortie du générateur de vapeur (6) du bloc de turbine à vapeur,
caractérisée en ce que l'échangeur de chaleur gas brut-gaz purifié (21) est suivi d'un générateur de vapeur basse pression (22) dont la sortie (32) côté secondaire est reliée à la partie basse pression (6) de la turbine à vapeur,
et que la sortie d'azote de l'unité de décomposition d'air (17), se trouvant dans l'installation de gaséification du charbon, est reliée exclusivement à la conduite de gaz purifié menant à la chambre de combustion (4) ou aux brûleurs dans la chambre de combustion (4).

2. Installation selon la revendication 1, caractérisée en ce que la sortie pour l'oxygène de l'installation de décomposition d'air (17) est reliée à un compresseur (16) à travers un accumulateur tampon d'oxygène (34) sous pression.

3. Installation selon la revendication 1 ou 2, caractérisée en ce que la sortie pour l'azote de l'installation de décomposition d'air (17) est reliée à un compresseur (30) à travers un accumulateur tampon d'azote (35) sous pression.

4. Installation selon une des revendications 1 à 3, caractérisée en ce que, en aval de l'échangeur de chaleur haute pression (19), le côté primaire de cet échangeur présente une conduite de gaz (33) qui est reliée à la conduite de gaz dans la zone de refroidissement du gazéificateur (15) de l'installation de gazéification du charbon.

83 P 6024